# DEMANDE DE BREVET EUROPEEN

(11) **EP 4 261 005 A1**
(43) Date de publication de la demande: **18.10.2023**
(21) Numéro de dépôt: 23164344.6
(22) Date de dépôt: 27.03.2023
(51) Int. Cl.: B29C 45/40, B29C 45/26, B29C 45/04

(54) **MOULE AVEC SYSTEME D'EJECTION**

(30) Priorité: 11.04.2022 FR 2203284
(71) Demandeur: LIFTMOULD, LDA, 3050-184 Casal Comba Mealhada (PT)
(72) Inventeur: RODRIGUES DA COSTA, José, 3080-232 FIGUEIRA DA FOZ (PT)
(74) Mandataire: IPAZ

(57) **Abrégé**

L'invention concerne un moule pour réaliser au moins une pièce moulée par injection de matière, le moule comprenant une partie mobile et une partie fixe, chacune comprenant une plaque porte empreinte. Le moule comporte un bloc d'éjection (27, 28), pour éjecter ladite pièce moulée, monté mobile par rapport à ladite partie fixe de moule entre une position escamotée et une position d'éjection. Le bloc d'éjection comporte un premier dispositif (4) d'entrainement en déplacement, de la position escamotée à la position d'éjection et inversement, et un second dispositif (6) d'entrainement en déplacement indépendant dudit premier dispositif, ledit second dispositif étant apte à déplacer, sur une distance prédéterminée (D), ledit bloc d'éjection de ladite position escamotée à une position intermédiaire entre ladite position escamotée et ladite position d'éjection. Le premier dispositif est monté avec un débattement sur ledit bloc d'éjection (27, 28), présentant une longueur qui correspond à ladite distance prédéterminée.

## Description

L'invention a trait au démoulage des articles moulés dans les moules par injection.

Elle concerne, en particulier, des moyens mécaniques assurant l'éjection des pièces moulées.

Les moule comportent, de façon usuelle, deux parties parmi lesquelles l'une ou l'autre partie, ou même les deux parties, sont montées mobiles pour permettre l'ouverture et la fermeture du moule. L'injection de matière plastique dans le moule se fait quand les deux parties de moules sont assemblées et l'éjection de la pièce moulée se fait après ouverture du moule.

Dans le cadre de l'invention présentée, on considérera un moule comportant une partie fixe de moule, présentant une première empreinte de moule (matrice ou poinçon) et une partie mobile de moule, portant une seconde empreinte de moule (matrice ou poinçon, venant s'associer à la première empreinte de moule en position fermée du moule).

L'invention s'intéresse en particulier l'éjection de la pièce moulée.

Pour éjecter les pièces, la plaque porte empreinte d'une partie du moule peut être traversé par des éjecteurs pour prendre appui contre la pièce moulée, de manière à la décoller de la plaque porte empreinte.

Dans la pratique, ces éjecteurs sont entrainés en déplacement par une plaque d'éjection qui, elle-même, est entrainée en déplacement au moyen de vérins hydrauliques. De tels vérins sont usuellement utilisés pour remplir cette fonction car, parmi tous les vérins, ce sont les vérins les plus économiques pour générer la puissance nécessaire au déplacement du bloc d'éjection.

Aujourd'hui, il peut être nécessaire d'utiliser des moules en salle blanche. On comprendra par « salle blanche » une pièce ou une série de pièces où la concentration particulaire est maîtrisée afin de minimiser l'introduction, la génération, la rétention de particules à l'intérieur, généralement dans un but spécifique industriel ou de recherche (les salles blanches sont normalisées).

Or, les vérins hydrauliques ne sont pas adaptés pour une mise en oeuvre en salle blanche : ils doivent donc être remplacés par d'autres vérins, par exemple, des vérins électriques.

Les vérins électriques n'étant pas aussi puissants que les vérins hydrauliques, il est nécessaire d'en prévoir plusieurs. Le coût du moule en est alors considérablement augmenté.

L'invention vise à offrir une alternative à l'utilisation de vérin hydrauliques associés à un bloc d'éjection dans un moule.

L'invention propose, à cet effet, un moule pour la réalisation d'au moins une pièce moulée par injection de matière, ledit moule comprenant une partie fixe de moule et une partie mobile de moule, apte à passer d'une position d'ouverture de moule à une position de fermeture du moule, et inversement.

Le moule est remarquable en ce qu'il comprend un bloc d'éjection pour éjecter ladite pièce moulée de la partie fixe de moule, ledit bloc d'éjection comprenant une plaque montée mobile en déplacement entre une position escamotée et une position d'éjection, et inversement, ledit bloc d'éjection comportant un premier dispositif d'entrainement en déplacement de ladite plaque de ladite position escamotée à ladite position d'éjection, et inversement. De plus, conformément à l'invention, ledit bloc d'éjection comporte un second dispositif d'entrainement en déplacement de ladite plaque, apte à être fixé sur ladite partie fixe de moule, ledit second dispositif étant indépendant dudit premier dispositif d'entrainement en déplacement, ledit second dispositif d'entrainement étant apte à déplacer, sur une distance prédéterminée, ladite plaque dudit bloc d'éjection de ladite position escamotée à une position intermédiaire entre ladite position escamotée et ladite position d'éjection. Enfin, ledit premier dispositif d'entrainement en déplacement est fixé avec un débattement sur ladite plaque dudit bloc d'éjection, ledit débattement présentant une longueur qui correspond à ladite distance prédéterminée.

On comprendra par « fixé avec débattement » le fait que le premier dispositif d'entrainement est solidarisé au moins partiellement avec le bloc d'éjection (un élément retient le premier dispositif au bloc d'éjection) mais que cette solidarisation (ce lien) se fait en autorisant un mouvement du premier dispositif par rapport au bloc d'éjection, ou un mouvement du bloc d'éjection par rapport au premier dispositif, ou les deux.

La mise en oeuvre de deux dispositifs indépendants assurant le déplacement du bloc d'éjection, associés au montage avec un débattement du premier dispositif d'entrainement sur le bloc d'éjection (ou inversement), permet de décoller la pièce moulée avant son éjection du moule, ce qui facilite l'étape démoulage.

Ainsi, la combinaison de deux dispositifs de déplacement permet de faciliter l'éjection d'une pièce moulée : les dispositifs utilisés pour déplacer le bloc d'éjection n'ont pas besoin d'être aussi puissants que des vérins hydrauliques qui peuvent alors, avantageusement, être remplacés par d'autre moyens d'entrainement en déplacement du bloc d'éjection.

Le moule conforme à l'invention peut également comprendre les caractéristiques suivantes, prises séparément ou en combinaison :
- ledit second dispositif d'entrainement en déplacement comporte un appareil de rappel élastique, apte à se déformer élastiquement entre un état compressé et un état décompressé,
- en position escamotée de la plaque dudit bloc d'éjection, ledit second dispositif d'entrainement en déplacement est positionné contre ladite plaque dudit bloc d'éjection,
- ledit second dispositif d'entrainement en déplacement comporte au moins un vérin à gaz,
- ledit premier dispositif d'entrainement en déplacement de la plaque du bloc d'éjection comprend un système de vis sans fin entrainée en rotation par un moteur électrique, ledit système comprenant un dispositif de fixation sur ledit bloc d'éjection, ledit dispositif de fixation étant fixé avec ledit débattement sur ledit bloc d'éjection, ledit dispositif de fixation comportant un manchon taraudé recevant ladite vis sans fin, ledit manchon étant apte à se déplacer sur ladite vis sans fin entrainée en rotation dans un sens ou dans l'autre suivant le sens de rotation imposé à ladite vis sans fin par ledit moteur électrique,
- ledit dispositif de fixation comporte au moins un trou traversant de forme oblongue, formant rail de guidage pour un boulon de fixation vissé dans ladite plaque dudit bloc d'éjection, ledit dispositif de fixation étant libre de se déplacer de part et d'autre dudit boulon entre deux extrémités dudit trou traversant, ladite distance prédéterminée correspondant à la longueur dudit trou traversant de forme oblongue,
- la plaque d'éjection est solidaire de tiges d'éjection, lesdites tiges d'éjection traversant ladite fixe partie de moule,
- la partie mobile de moule comporte des bras aptes à venir en contact avec la plaque dudit bloc d'éjection en position intermédiaire et aptes à repousser la plaque dudit bloc d'éjection de la position intermédiaire à ladite position escamotée.

L'invention concerne également un procédé de mise en oeuvre d'un moule tel que défini ci-dessus, qui comporte les étapes suivantes :
- ouverture du moule par déplacement de la partie mobile,
- premier déplacement, sur ladite distance prédéterminée, de la plaque dudit bloc d'éjection de la position escamotée à la position intermédiaire, sous l'action d'une poussée exercée par le second dispositif de déplacement sur le bloc d'éjection, ledit premier déplacement conduisant au décollement d'une pièce moulée,
- second déplacement de la plaque dudit bloc d'éjection de la position intermédiaire à ladite position d'éjection, commandé par le premier dispositif de déplacement, ledit second déplacement conduisant à l'éjection de ladite pièce décollée,
- troisième déplacement de la plaque dudit bloc d'éjection de la position d'éjection à la position intermédiaire, commandé par ledit premier dispositif de déplacement,
- quatrième déplacement de la plaque dudit bloc d'éjection de la position intermédiaire à la position escamotée, sous l'action d'une poussée exercée par le déplacement de la partie mobile de moule passant de la position d'ouverture à la position de fermeture du moule.

Avantageusement, le procédé de mise en oeuvre peut également comprendre des étapes, suivant lesquelles la plaque dudit bloc d'éjection se décale de ladite distance prédéterminée par rapport au premier dispositif de déplacement :
- lors dudit second déplacement pour assurer le décollage de la pièce moulée par déformation élastique d'un appareil de rappel élastique que comporte ledit second dispositif de déplacement, et
- lors dudit quatrième déplacement, pour assurer la mise sous tension dudit appareil de rappel élastique.

L'invention sera davantage comprise au regard du mode de réalisation qui va maintenant être présenté, en faisant référence aux dessins annexés parmi lesquels :
[Fig. 1] est une vue schématique en coupe d'un moule d'injection conforme à l'invention, en position de fermeture,
[Fig. 2] est une vue schématique en coupe du moule conforme à l'invention, en position d'ouverture et avant éjection de la pièce moulée,
[Fig. 3] est une vue schématique en coupe du moule, en position d'ouverture et au moment d'une pré -éjection,
[Fig. 4] est également une vue schématique en coupe du moule, en position d'ouverture et au moment de l'éjection,
[Fig. 5] montre encore le moule, suivant une première étape de fermeture,
[Fig. 6] montre encore le moule, suivant une seconde étape de fermeture, et
[Fig. 7] est une vue partielle d'un exemple de vis à bille dont peut être équipé un bloc d'éjection d'un moule conforme à l'invention.

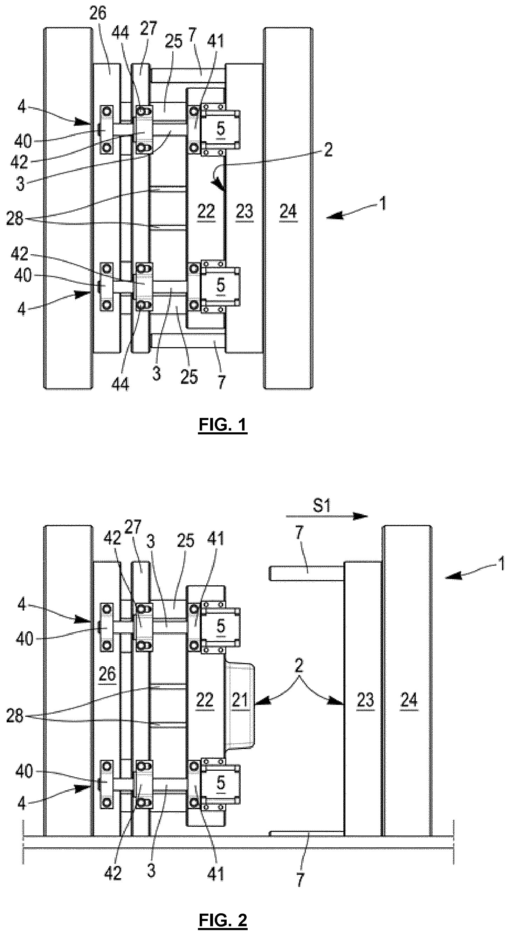

Les figures 1 à 6 montrent un moule 1 comportant une empreinte de moule 2 pour réaliser une pièce (non illustrée) par injection de matière.

Le moule 2 comporte, de façon classique, une matrice (non visible) et un poinçon 21, de forme sensiblement complémentaire à la forme de la matrice.

La matrice et le poinçon 21 sont portés respectivement dans des blocs 23 et 22 du moule, respectivement.

Le bloc 23 de moule, constituant la partie mobile de moule et portant la matrice est fixé sur une première semelle 24.

Le bloc 22 de moule portant le poinçon 21 est fixé à des tasseaux 25, et les tasseaux 25 sont fixés à une seconde semelle 26.

Les tasseaux 25 permettent de créer un espace entre le bloc 22 du moule portant le poinçon 21 et la semelle 26.

Le moule comporte un bloc éjecteur (ou bloc d'éjection) comportant une plaque 27 qui est montée mobile en déplacement entre une position escamotée (ou position de repos du bloc éjecteur) et une position d'éjection.

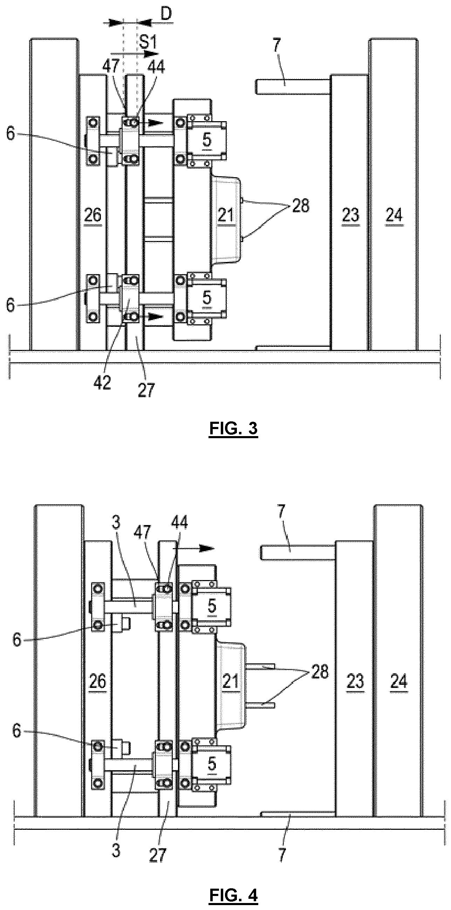

Le bloc d'éjection comprend des tiges d'éjection 28 qui traversent le bloc 22 et dont les extrémités peuvent, en position d'éjection du bloc d'éjection, saillir du poinçon 21 pour pousser une pièce moulée afin de l'éjecter (voir figures 3 et 4).

La plaque 27 et les tiges 28 qu'elle porte sont entrainés en déplacement dans un sens d'ouverture du moule au moyen de deux systèmes 4 d'entrainement en déplacement, comportant chacun une vis 3 à billes (vis sans fin) et un dispositif permettant d'entrainer en rotation la vis à bille, chacun des deux systèmes 4 étant fixé au moins partiellement sur la plaque 27, ainsi que sur la seconde semelle 26 et sur le bloc fixe 22 du moule.

Les deux systèmes 4 de vis à billes comprennent ainsi chacun trois parties :
- Une première partie, comprenant un premier dispositif 40 de fixation et de guidage d'une première extrémité de la vis à billes, est fixée sur la semelle 26 qui est fixe et qui est associée au bloc 22 du moule portant le poinçon 21,
- Une seconde partie, comprenant un second dispositif 41 de fixation et de guidage d'une seconde extrémité de la vis à billes, est fixée sur le bloc 22 du moule portant le poinçon 21, et
- Une troisième partie, comprenant un troisième dispositif 43 de fixation et de guidage de la vis à billes, est fixée sur la plaque 27 du bloc d'éjection.

Les premiers et second dispositifs 40 et 41 sont fixes ne bougent pas par rapport à la vis 3 à billes, tandis que le troisième dispositif 42 est monté mobile en déplacement sur la vis 3 quand la vis 3 est entrainée en rotation autour de son axe. Le troisième dispositif 42 est donc monté mobile par rapport aux premier et second dispositifs 40 et 41.

Le troisième dispositif 42 étant fixé sur la plaque 27 du bloc d'éjection, son déplacement entraine le déplacement de l'ensemble plaque 27/ tiges 28 du bloc d'éjection : dans un sens si la vis à billes 3 est entrainée en rotation dans un sens, et dans l'autre sens si la vis à billes 3 est entrainée en rotation dans l'autre sens.

Le déplacement du troisième dispositif 42, fixé à la plaque du bloc d'éjection, permet ainsi de faire passer la plaque 27 du bloc d'éjection d'une position escamotée à une position d'éjection, permettant d'éjecter une pièce moulée, et inversement : de la position d'éjection à la position escamotée.

Pour entrainer la vis à billes 3 en rotation, chaque système 4 est équipé d'un moteur 5 fixé sur le bloc 22.

Le moteur 5 peut être, de préférence, un moteur « brushless » (moteur sans balai). Il s'agit par exemple d'un moteur de type machine synchrone autopilotée à aimants permanents, appartenant à la catégorie des machines synchrones, dont le rotor est constitué d'un ou de plusieurs aimants permanents et peut être pourvu d'un capteur de position rotorique.

L'avantage d'utiliser un tel moteur 5 est qu'il est beaucoup plus précis que d'autres moteurs. Cela permet de résoudre des problèmes de synchronisation de mouvements du bloc d'éjection dans le moule.

En entrainant en rotation la vis 3 sans fin, le dispositif 42 se déplace le long de la vis, suivant le sens de rotation donné à la vis 3.

C'est ainsi que le dispositif 42 se déplace sur la vis 3 vers le bloc 22 fixe du moule, entrainant en déplacement la plaque 27 du bloc d'éjection. Quand le dispositif 42 se trouve au plus près du bloc fixe 22, le bloc d'éjection est dans sa position d'éjection.

Quand le dispositif 42 se trouve au plus près de la seconde semelle 26 fixe, il se trouve dans la position escamotée.

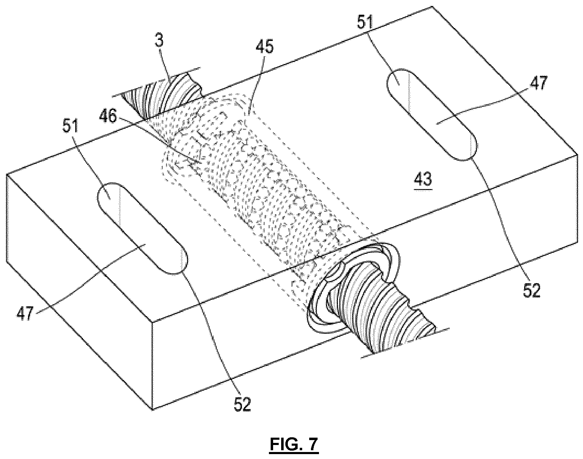

La vis à billes 3 et le dispositif de fixation 42 sont plus particulièrement montrés en figure 7 : la vis à billes 3 est une vis sans fin qui est montée rotative dans un manchon taraudé 45, le manchon étant solidaire d'une plaque 43. Des billes 46 sont placées entre le filetage de la vis sans fin et le filetage interne du manchon 45 et favorisent la rotation de la vis dans le filetage en limitant, voir supprimant, les frottements.

La plaque 43 est fixée sur la plaque 27 du bloc d'éjection par des boulons 44, visibles en figures 1 à 6 : pour ce faire, la plaque 43 est traversée par des trous 47 de forme oblongue et les boulons 44 sont fixés sur le dispositif de fixation 42 en traversant les trous 47 oblongues.

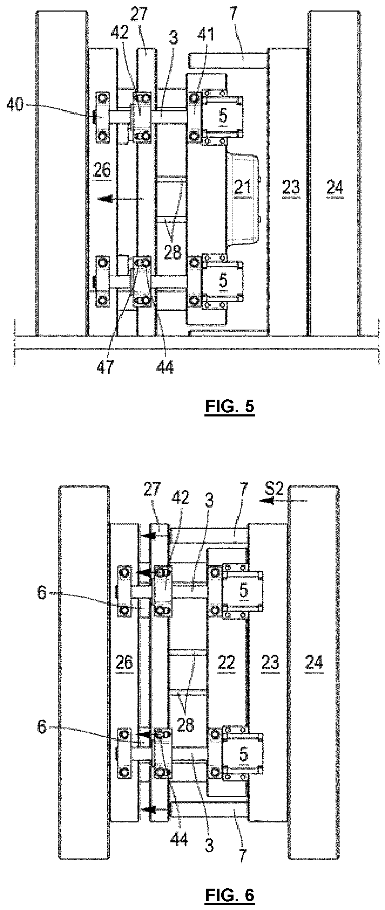

Grâce à cette forme oblongue, le dispositif 42 peut être déplacé entre deux positions sur la plaque 27 du bloc d'éjection : suivant une première position, montrée en figure 1 ou en figure 6, le dispositif 42 est positionné au plus près de la seconde semelle 26 et le boulon 44 est placé en butée contre une première extrémité 51 du trou traversant oblong 47. Suivant une seconde position, montrée en figure 3 ou 4, le dispositif 42 est positionné au plus loin de la seconde semelle 26 et s'oriente vers le bloc 22 : le boulon 44 est alors placé en butée contre une seconde extrémité 52 interne au trou traversant oblong 47, à l'opposé de la première extrémité 51.

De cette façon, la plaque 27 du bloc d'éjection peut se déplacer sur une courte distance D de part et d'autre du dispositif 42 : elle est ainsi mobile par rapport au dispositif de fixation 42.

Cette courte distance D autorise un déplacement de la plaque 27 du bloc d'éjection au-delà de ce qu'autorise la rotation de la vis à bille : ce déplacement permet, dans le cadre de ce mode de réalisation d'actionner un appareil 6 de rappel élastique fixé sur le bloc 26.

L'appareil de rappel élastique 6 travaille en compression. Dans le cadre de ce mode de réalisation, les appareils de rappel élastique sont des vérins à gaz. Toutefois, ils pourraient être remplacés par des dispositifs assurant un rappel élastique (c'est-à-dire qu'ils peuvent reprendre une forme initiale après avoir été déformés) par exemple un dispositif comportant un ou plusieurs ressorts.

La fonction de cet appareil de rappel élastique 6 est de repousser automatiquement la plaque 27 du bloc d'éjection sur une courte distance D, correspondant à la distance de déplacement autorisée du boulon 44 dans le trou traversant 47 du dispositif 42, quand l'appareil de rappel élastique 6 n'est plus contraint. Cela permet de pousser le bloc d'éjection vers le bloc 22, les tiges 28 du bloc d'éjection traversant ainsi le poinçon 21 pour venir exercer une force sur une pièce moulée, contre le poinçon, permettant ainsi de la décoller avant son éjection.

Pour mettre sous pression l'appareil de rappel élastique 6 (ou pour charger l'appareil de rappel élastique en contraignant l'élément élastiquement déformable qu'il comporte), il est prévu d'équiper le bloc 23 mobile du moule de deux bras 7 venant se positionner contre la plaque 27 du bloc d'éjection.

Lorsque le moule est refermé, les extrémités des deux bras 7 viennent en buter contre la plaque 27 du bloc d'éjection et la repousse sur la distance D : cela permet de repousser (de faire rentrer) les extrémités des tiges 28 dans le poinçon 21 et de comprimer les appareils de rappel élastiques 6, grâce au débattement des boulons 44 dans les trous traversants 47 des dispositifs de fixation et de guidage 42.

Dans le mode de réalisation représentée sur les figures 1 à 5, il est prévu de ne mettre en oeuvre deux systèmes 4 de vis à billes pour déplacer la plaque 27 du bloc d'éjection. Il pourrait être prévu d'équiper le moule de plusieurs autres systèmes de vis à billes, ou d'une seul système 4 de vis à billes, sans sortir du cadre de l'invention.

Grâce à l'invention, la pression ne fonctionne plus au moyen de systèmes hydrauliques : elle ne fonctionne que par des moyens électriques ou à gaz.

Il va maintenant être fait référence aux figures 1 à 6 pour décrire le fonctionnement du moule équipé du bloc d'éjection avec système de vis à billes conforme à l'invention.

En figure 1, le moule est en position fermée, le moule est fermé et de la matière est injectée dans le moule 2 (première étape d'un procédé de mise en oeuvre d'un moule conforme à l'invention).

Pour éjecter la pièce moulée (non illustrée) du moule, le moule est d'abord ouvert, comme montré en figure 2 (seconde étape du procédé conforme à l'invention), en déplaçant, suivant le sens d'ouverture S1, les blocs 23 et la première semelle 24 du moule (partie mobile du moule 1).

Dans cette position, la pièce moulée (nous illustrée) reste collée quelques instants sur le poinçon 21 de l'autre partie du moule qui, elle, reste fixe quelques instants.

Puis, la pièce moulée est automatiquement décollée de la façon suivante : en ouvrant le moule, les bras 7 de la partie mobile du moule cessent d'exercer une pression sur la plaque 27 du bloc d'éjection. De ce fait, les appareils de rappel élastique 6 ne sont plus contraints et reprennent leur forme en poussant sur la plaque 27 du bloc d'éjection.

La plaque 27 se déplace alors sur une courte distance D (figure 3) dans le même sens que le sens d'ouverture S1.

Les extrémités des tiges 28 traversent alors le poinçon 21 et décollent la pièce moulée du poinçon 21 du moule (troisième étape visant au décollage de la pièce, illustrée en figure 3).

Pour permettre une totale éjection de la pièce moulée (rendue plus facile du fait du décollage de la pièce), la plaque 27 du bloc d'éjection est entrainée en déplacement vers le bloc 22 du moule fixe grâce à l'entrainement en rotation de la vis sans fin 3, par commande du moteur 5 (la rotation de la vis entrainant le déplacement des dispositif 42 fixés à la plaque 27). Les tiges 28, entrainées également en déplacement avec la plaque 27, poussent la pièce moulée pour la dégager du moule 2 (quatrième étape d'éjection montrée en figure 4).

Un fois la pièce moulée éjectée, le moule doit retrouver sa position initiale.

Pour ce faire, suivant une cinquième étape de fermeture du moule, montrée en figure 5,la plaque du bloc d'éjection passe de sa position d'éjection à sa position escamotée suivant une première phase de déplacement, par commande de la rotation de la vis sans fin 3 en sens inverse au sens d'ouverture S1 (actionnée par le moteur 5), ce qui entraine le déplacement de la plaque 27 du bloc d'éjection et des tiges 8 (voir la flèche sur la figure 5).

On remarque que les boulons 44 se trouvent toujours positionnés contre l'extrémité interne 52 du trou oblong qui est orientée vers le bloc 22 du moule.

Suivant une seconde phase de fermeture du moule, montrée en figure 6, la partie mobile du moule (bloc 23) fixé à la première semelle 24 du moule (le bloc 23 portant la matrice du moule) est déplacé suivant le sens de fermeture S2, inverse du sens d'ouverture S1.

Le déplacement de la partie mobile du moule, pour ouvrir ou fermer le moule, se fait par tout moyen connu de l'homme du métier.

Lors du déplacement de la partie mobile du moule 2 dans le sens de fermeture S2, le poinçon 21 va entrer dans la matrice portée par le bloc 23 du moule et les extrémités des bras 7 vont venir en contact avec la plaque 27 du bloc d'éjection (figure 6).

Ce faisant, les bras 7 vont pousser sur la plaque 27 du bloc d'éjection et, en fin de fermeture du moule, la plaque sera déplacer d'une courte distance D (voir figure 6) correspondant au déplacement des boulons 44 dans le trou traversant 47 des dispositifs de fixation et de guidage 42 entre la première extrémité 51 de la forme oblongue et la seconde extrémité 52 de la forme oblongue du trou 47.

Cet ultime déplacement de la plaque 27 du bloc d'éjection permet d'exercer une pression sur les appareils de rappel élastique 6 (encore visibles en position détendue en figure 5) pour les contraindre en position comprimée (position comprimée montrée en figure 6). Cet ultime déplacement permet également de faire entrer totalement les extrémités des tiges 28 du bloc d'éjection dans le poinçon 21.

On comprend de la description qui précède comment l'invention permet de mettre en oeuvre un moule sans avoir à mettre en oeuvre de circuits hydrauliques.

On comprendra également comment le débattement autorisé de la plaque 27, par rapport au dispositif 42 qui la relie au système de vis à bille, permet de mettre en oeuvre des appareils permettant d'actionner, sur une courte distance, le bloc d'éjection, pour décoller la pièce moulée avant de l'éjecter complètement (ce qui facilite le démoulage).

## Revendications

1. Moule (1) pour la réalisation d'au moins une pièce moulée par injection de matière, ledit moule (1) comprenant une partie fixe (21, 22, 26) et une partie mobile (23, 24) apte à passer d'une position d'ouverture de moule à une position de fermeture du moule, et inversement,
ledit moule comprenant un bloc d'éjection (27, 28), pour éjecter ladite pièce moulée de la partie fixe (21, 22) de moule, ledit bloc d'éjection (27, 28) comprenant une plaque (27) montée mobile en déplacement entre une position escamotée et une position d'éjection, et inversement,
ledit bloc d'éjection comportant un premier dispositif (4) d'entrainement en déplacement de ladite plaque (27) de ladite position escamotée à ladite position d'éjection, et inversement,
**caractérisé en ce qu**e ledit bloc d'éjection comporte un second dispositif (6) d'entrainement en déplacement de ladite plaque (27), qui est fixé sur ladite partie fixe (26) de moule, ledit second dispositif (6) étant indépendant dudit premier dispositif (4) d'entrainement en déplacement, ledit second dispositif (6) d'entrainement étant apte à déplacer, sur une distance prédéterminée (D), ladite plaque (27) dudit bloc d'éjection (27, 28) de ladite position escamotée à une position intermédiaire entre ladite position escamotée et ladite position d'éjection, en ce que ledit premier dispositif (4) d'entrainement en déplacement est fixé avec un débattement sur ladite plaque (27) dudit bloc d'éjection (27, 28), ledit débattement présentant une longueur qui correspond à ladite distance prédéterminée (D),
**en ce que** ledit second dispositif (6) d'entrainement en déplacement comporte un appareil de rappel élastique, apte à se déformer élastiquement entre un état compressé et un état décompressé,
**et en ce que** en position escamotée de la plaque (27) dudit bloc d'éjection, ledit second dispositif (6) d'entrainement en déplacement est positionné contre ladite plaque (27) dudit bloc d'éjection (27, 28) dans un état compressé.

2. Moule selon la revendication 1, **caractérisée en ce que** ledit second dispositif (6) d'entrainement en déplacement comporte au moins un vérin à gaz.

3. Moule selon l'une quelconque des revendications précédentes, **caractérisée en ce que** ledit premier dispositif (4) d'entrainement en déplacement de la plaque (27) dudit bloc d'éjection comprend un système (4) de vis sans fin (3) entrainée en rotation par un moteur électrique (5), ledit système (4) comprenant un dispositif de fixation (42) sur ledit bloc d'éjection, ledit dispositif de fixation (42) étant fixé avec ledit débattement sur ledit bloc d'éjection (27), ledit dispositif de fixation (42) comportant un manchon (45) taraudé recevant ladite vis sans fin (3), ledit manchon (45) étant apte à se déplacer sur ladite vis sans fin (3) entrainée en rotation dans un sens ou dans l'autre suivant le sens de rotation imposé à ladite vis sans fin(3) par ledit moteur électrique (5).

4. Moule selon la revendication 3, **caractérisée en ce que** ledit dispositif de fixation (42) comporte au moins un trou traversant (47) de forme oblongue, formant rail de guidage pour un boulon (44) de fixation vissé dans ladite plaque (27) dudit bloc d'éjection, ledit dispositif de fixation (42) étant libre de se déplacer de part et d'autre dudit boulon (44) entre deux extrémités (51, 52) dudit trou traversant (47), ladite distance prédéterminée (D) correspondant à la longueur dudit trou traversant (47) de forme oblongue.

5. Moule selon la revendication 3, **caractérisée en ce que** la plaque d'éjection (27) est solidaire de tiges d'éjection (28), lesdites tiges d'éjection (28) traversant ladite fixe partie de moule (21).

6. Moule selon l'une quelconque des revendications précédentes, **caractérisée en ce que** la partie mobile (23) de moule comporte des bras (7) aptes à venir en contact avec la plaque (27) dudit bloc d'éjection (27, 28) en position intermédiaire et aptes à repousser la plaque (27 dudit bloc d'éjection (27, 28) de la position intermédiaire à ladite position escamotée.

7. Procédé de mise en oeuvre d'un moule selon l'une quelconque des revendications précédentes, **caractérisé en ce qu'**il comporte les étapes suivantes :
- ouverture du moule par déplacement de la partie mobile (23),
- premier déplacement, sur ladite distance prédéterminée (D), de la plaque (27) dudit bloc d'éjection (27, 28) de la position escamotée à la position intermédiaire, sous l'action d'une poussée exercée par le second dispositif (6) de déplacement sur le bloc d'éjection (27, 28), ledit premier déplacement conduisant au décollement d'une pièce moulée par passage du second dispositif d'un état compressé à un état décompressé,
- second déplacement de la plaque (27) dudit bloc d'éjection (27, 28) de la position intermédiaire à ladite position d'éjection, commandé par le premier dispositif (4) de déplacement, ledit second déplacement conduisant à l'éjection de ladite pièce décollée,
- troisième déplacement de la plaque (27) dudit bloc d'éjection (27, 28) de la position d'éjection à la position intermédiaire, commandé par ledit premier dispositif (4) de déplacement,
- quatrième déplacement de la plaque (27) dudit bloc d'éjection (27, 28) de la position intermédiaire à la position escamotée, sous l'action d'une poussée exercée par le déplacement de la partie mobile (23) de moule passant de la position d'ouverture à la position de fermeture du moule, contraignant le second dispositif dudit état décompressé audit état compressé.

8. Procédé de mise en oeuvre selon la revendication 7, **caractérisé en ce que** la plaque (27) dudit bloc d'éjection (27, 28) se décale de ladite distance prédéterminée (D) par rapport au premier dispositif (4) de déplacement :
- lors dudit second déplacement pour assurer le décollage de la pièce moulée par déformation élastique d'un appareil de rappel élastique que comporte ledit second dispositif de déplacement, et
- lors dudit quatrième déplacement, pour assurer la mise sous tension dudit appareil de rappel élastique.
